# EUROPEAN PATENT SPECIFICATION

(11) **EP 4 358 377 B1**
(45) Date of publication and mention of the grant of the patent: **28.10.2026**
(21) Application number: 24154879.1
(22) Date of filing: 10.02.2021
(51) Int. Cl.: B64D 27/31, B64D 27/34, B64C 29/00, B64D 33/08, H02K 9/197

(54) **ELECTRIC DRIVE SYSTEM**
ELEKTRISCHES ANTRIEBSSYSTEM
SYSTÈME D'ENTRAÎNEMENT ÉLECTRIQUE

(30) Priority: 04.03.2020 US 202016808818
(43) Date of publication of application: 24.04.2024
(62) Document number(s) of the earlier application(s) in accordance with Art. 76 EPC: 21156415.8 / 3 876 400
(73) Proprietor: Textron Innovations Inc., Providence, Rhode Island 02903-2525 (US)
(72) Inventor: HEIRONIMUS, William Kyle, 75204 Dallas (US); CHUNG, Stephen Yibum, 76248 Keller (US)
(74) Representative: Barker Brettell LLP

(56) References cited:
- US-A1- 2011 084 561
- US-A1- 2017 203 839
- US-A1- 2019 144 126
- US-B2- 8 469 306
- US-B2- 9 823 022

## Description

### TECHNICAL FIELD

This disclosure relates in general to the field of aircraft and, more particularly, though not exclusively, to an electric drive system with integrated thermal cooling implemented as a line replaceable unit ("LRU") for such aircraft.

### BACKGROUND

An electric motor may be used by aircraft as a power source for various functions, such as supplying rotational energy in an aircraft propulsion system. Some electric motors cool their internal electrical components using airflow, drawing ambient air into the motor and exhausting the warmed air out of the motor. In aircraft propulsion systems that utilize only a single motor, the lack of a backup motor increases the likelihood of a crash or other catastrophic condition should the motor fail. A single motor propulsion system also may not meet the power demands required by the propulsion system in the most efficient manner. Using two or more motors in a propulsion system addresses these concerns, but can give rise to other issues, including, but not limited to, an air management problem.

US2011084561 discloses an oil-cooled motor/generator for an automotive powertrain located outside of a transmission, such as a BAS motor/generator. The motor/generator may have a stator, a rotor circumscribed by the stator, and a motor shaft on which the rotor is mounted for rotation. A housing assembly may surround the stator and the rotor, with a bearing positioned between the housing assembly and the motor shaft. A flow control member may at least partially circumscribe the rotor axially adjacent the stator. A bearing retainer may be positioned axially adjacent the bearing. A rotor end ring may be axially adjacent the rotor. The housing assembly may have an inlet configured to receive cooling oil. The housing assembly, the flow control member, the bearing retainer, and the rotor end ring may be configured to distribute the cooling oil from the inlet to cool the stator, the rotor and the bearing.

### SUMMARY

One embodiment is an electric drive system for an aircraft including at least one motor; at least one gear box associated with the at least one motor; and a cooling fan for drawing air into the electric drive system across an electronic component of the electric drive system to cool the electronic component and for expelling air into an oil cooler for cooling oil contained therein. The electric drive system further includes an oil distribution system for distributing oil cooled by the oil cooler to at least one motor and at least one gearbox, wherein the distributed oil is used to cool the at least one motor and the at least one gearbox; a reservoir for collecting the distributed oil after it has been used to cool the at least one motor and the at least one gearbox; and at least one structural element for retaining the at least one motor, the at least one gearbox, the cooling fan, the oil distribution system, and the reservoir together as a unit.

The electric drive system may further include a pump associated with the reservoir for returning the oil collected in the reservoir to the oil cooler. In some embodiments of the electric drive system, the least one structural element may comprise a housing. In other embodiments of the electric drive system, the at least one structural element may further comprise first and second rails disposed on opposite sides of the unit. In some embodiments of the electric drive system, the at least one motor includes redundant electric motors.

The power generated by the at least one motor of the electric drive system may be used to drive a rotor shaft disposed through a center of the electric drive system. In some embodiments, the fan of the electric drive system may be the fan is mechanically powered by the rotor shaft. In other embodiments, the fan of the electric drive system may be fan is electrically powered. In certain embodiments, the electronic components of the electric drive system are inverters. The electric drive system is implemented as a line replaceable unit. In some embodiments, the electric drive system may include a collective actuator for controlling a collective pitch of rotor blades connected to the rotor shaft. In other embodiments, the electric drive system may include a cyclic actuation system for controlling a cyclic pitch of rotor blades connected to the rotor shaft.

Another embodiment is a rotorcraft comprising a rotor system, the rotor system including a ducted rotor; a nacelle for supporting the ducted rotor; and an electric drive system. The electric drive system may include at least one motor; at least one gear box associated with the at least one motor; a cooling fan for drawing air into the electric drive system across an electronic component of the electric drive system to cool the electronic component and for expelling air into an oil cooler for cooling oil contained therein; and an oil distribution system for distributing oil cooled by the oil cooler to at least one motor and at least one gearbox, wherein the distributed oil is used to cool the at least one motor and the at least one gearbox. The electric drive system may further include a reservoir for collecting the distributed oil after it has been used to cool the at least one motor and the at least one gearbox; and at least one structural element for retaining the at least one motor, the at least one gearbox, the cooling fan, the oil distribution system, and the reservoir together as a unit. The electric drive system may be implemented as a line replaceable unit disposed in the nacelle.

The rotorcraft may further include a pump associated with the reservoir for returning the oil collected in the reservoir to the oil cooler. Additionally, the at least one structural element of the rotorcraft may include at least one of a housing and first and second rails disposed on opposite sides of the unit. The at least one motor of the rotorcraft may include redundant electric motors and power generated by the redundant electric motors may drive a rotor shaft disposed through a center of the electric drive system.

Yet another embodiment is a rotorcraft comprising a rotor system including an unducted ducted rotor; a nacelle for supporting the ducted rotor; and an electric drive system. The electric drive system may include at least one motor; at least one gear box associated with the at least one motor; and a cooling fan for drawing air into the electric drive system across an electronic component of the electric drive system to cool the electronic component and for expelling air into an oil cooler for cooling oil contained therein. The electric drive system may further include an oil distribution system for distributing oil cooled by the oil cooler to at least one motor and at least one gearbox, wherein the distributed oil is used to cool the at least one motor and the at least one gearbox; a reservoir for collecting the distributed oil after it has been used to cool the at least one motor and the at least one gearbox; and at least one structural element for retaining the at least one motor, the at least one gearbox, the cooling fan, the oil distribution system, and the reservoir together as a unit. The electric drive system may be implemented as a line replaceable unit disposed in the nacelle.

The rotorcraft may further include a pump associated with the reservoir for returning the oil collected in the reservoir to the oil cooler. In some embodiments, the at least one structural element of the rotorcraft may comprise at least one of a housing and first and second rails disposed on opposite sides of the unit. In other embodiments, the at least one motor of the rotorcraft may comprise redundant electric motors and power generated by the redundant electric motors drives a rotor shaft disposed through a center of the electric drive system.

### BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements:
FIGs. 1A-1B illustrate a tilting ducted rotor aircraft including an electric drive system line replaceable unit in accordance with embodiments described herein;
FIG. 2 illustrates a ducted rotor of the aircraft of FIGs. 1A-1B in accordance with embodiments described herein;
FIG. 3 is a close-up cutaway view of a portion of the ducted rotor of FIG. 2 in accordance with embodiments described herein;
FIGs. 4A-4C illustrate an example embodiment of an electric drive system line replaceable unit in accordance with one embodiment for implementation in an aircraft having ducted rotors, such as that illustrated in FIGs. 1A-1B;
FIG. 5 illustrates an exterior of an example electric drive system line replaceable unit in accordance with alternative embodiments for implementation in aircraft having ducted rotors, such as that illustrated in FIGs. 1A-1B;
FIG. 6 illustrates a cutaway view of the example electric drive system line replaceable unit of FIG. 5;
FIG. 7 is a block diagram illustrating a mechanical power path of an example electric drive system line replaceable unit in accordance with embodiments described herein;
FIG. 8 is a block diagram illustrating mechanical attachments of various components of an example electric drive system line replaceable unit in accordance with embodiments described herein;
FIG. 9 is a block diagram illustrating a thermal cooling system of an example electric drive system line replaceable unit in accordance with embodiments described herein;
FIG. 10 illustrates a tilting unducted rotor aircraft including an electric drive system line replaceable unit in accordance with embodiments described herein;
FIG. 11 illustrates an exterior of an example electric drive system line replaceable unit in accordance with other alternative embodiments for implementation in an aircraft having unducted rotors, such as that illustrated in FIG. 10; and
FIG. 12 illustrates a cutaway view of the example electric drive system line replaceable unit of FIG. 11.

### DETAILED DESCRIPTION

Example embodiments that may be used to implement the features and functionality of this disclosure will now be described with more particular reference to the accompanying FIGURES.

Described herein is a power unit assembly comprising an electrical drive system line replaceable unit including multiple electrical motors combined via a gear box. The motors power a rotor shaft through the gearbox. In certain embodiments, motor cooling is handled via a liquid reservoir/pump assembly, an air-to-liquid heat exchanger, and an air cooling fan. Fluid may be cycled through the motors and the heat exchanger. The cooling fan may be powered either electrically or mechanically (e.g., via the rotor shaft). A collective pitch control rod and actuator may also be integral to the assembly, but is optional. Embodiments of the disclosure allow for the entire power unit to be easily replaced, since the supporting systems (thermal cooling, fixed controls, transmis sion) are integral to the assembly. The only interfaces to the aircraft are the electrical connectors, the structural attachments to the airframe, and the rotor bolt pattern. The integration allows for expedited aircraft maintenance and lower aircraft direct operating cost.

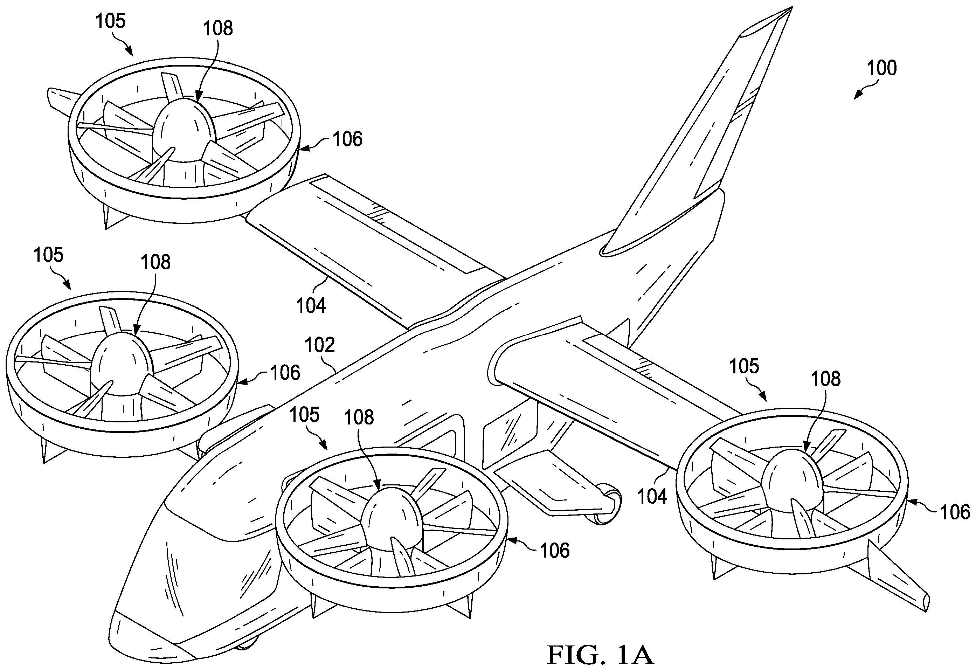

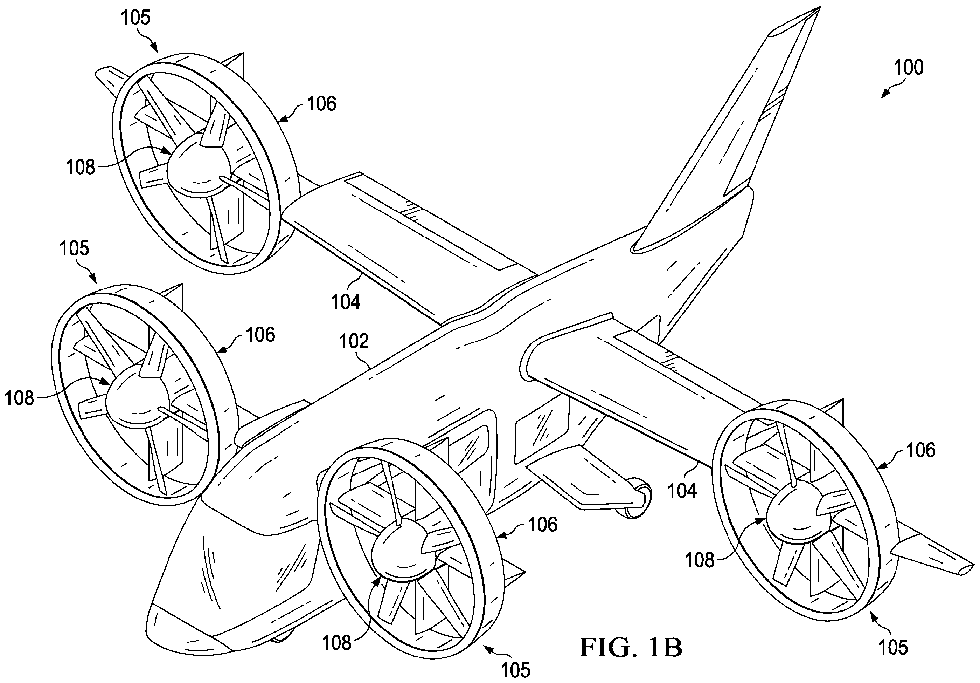

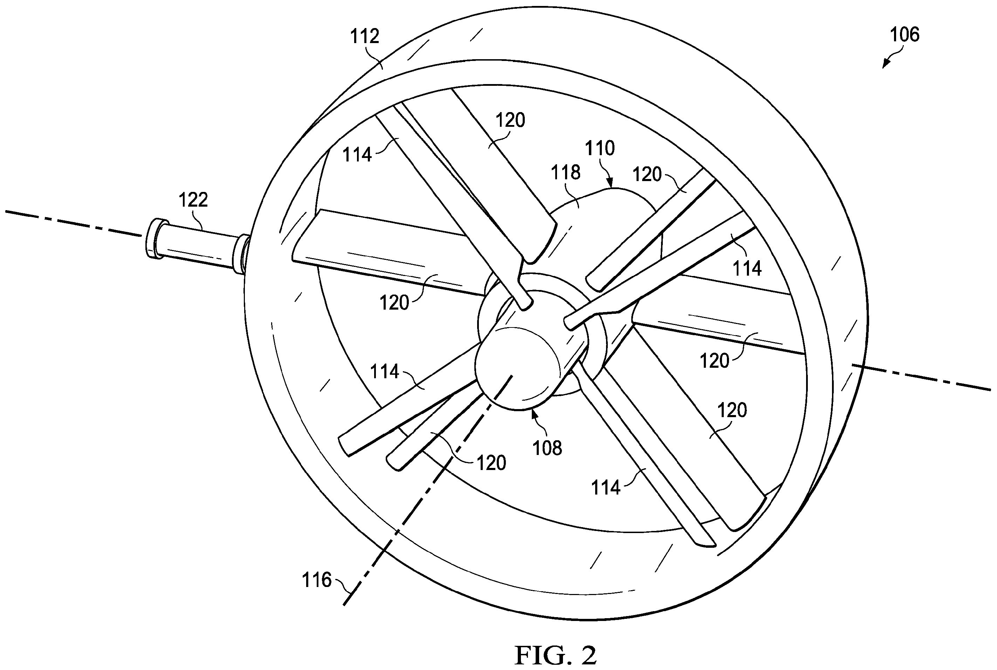

FIGs. 1A and 1B illustrate an example tiltrotor aircraft 100 that includes ducted rotors (or fans). The tiltrotor aircraft 100 is convertible between a helicopter mode (shown in FIG. 1A), which allows for vertical takeoff and landing, hovering, and low speed directional movement, and an airplane mode (shown in FIG. 1B), which allows for forward flight as well as horizontal takeoff and landing. Aircraft 100 includes a fuselage 102, wings 104, and a plurality propulsion assemblies 105 each comprising a ducted fan 106 rotatably coupled to fuselage 102 or wings 104. As best shown in FIG. 2, each ducted fan 106 includes a rotor assembly 108, a flow-straightening stator assembly 110, and a duct 112 surrounding rotor assembly 108 and stator assembly 110.

Rotor assembly 108 includes a plurality of rotor blades 114 configured to rotate about a mast axis 116. Rotation of rotor blades 114 about mast axis 116 generates lift while operating in helicopter mode and thrust while operating in airplane mode. Stator assembly 110 is positioned downstream of rotor blades 114 and includes a stator hub 118 centrally located within duct 112 and a plurality of stator vanes 120 coupled between duct 112 and stator hub 118. Stator hub 118 may house an electric motor therein configured to produce rotational energy that drives the rotation of rotor assembly 108. Alternatively, stator hub 118 may house a gearbox therein that drives the rotation of rotor assembly 108, wherein the gearbox receives rotational energy from a driveshaft passing through an attachment post 122 and the adjacent stator vane 120.

Rotor blade assemblies 108 can be collectively manipulated to selectively control direction, thrust and lift of tilting ducted fan aircraft 100. Indeed, the collective pitch of rotor blade assemblies 108 may be independently controlled from one another to allow for differential thrust output by ducted fans 106. For example, the collective pitch of the rotor blade assembly of one ducted fan may be higher or lower than the collective pitch of rotor blade assembly of another ducted fan such that the thrust generated by each ducted fan differs from each of the others.

Ducted fans 106 are each convertible, relative to fuselage 102, between a horizontal position, as shown in FIGs. 1A, and a vertical position, as shown in FIG. 1B. Ducted fans 106 are in the horizontal position during vertical takeoff and landing mode. Vertical takeoff and landing mode may be considered to include hover operations of tilting ducted fan aircraft 100. Ducted fans 106 are in the vertical position during forward flight mode, in which tilting ducted fan aircraft 100 is in forward flight. In forward flight mode, ducted fans 106 direct their respective thrusts in the aft direction to prope1 tilting ducted fan aircraft 10 forward. Tilting ducted fan aircraft 100 is operable to fly in all directions during the vertical takeoff and landing mode configuration of FIG. 1A, although faster forward flight is achievable while in the forward flight mode configuration of FIG. 1B. Ducted fans 106 may be tiltable between the vertical and horizontal positions by a rotatable shafts (not shown) extending through wings 104 and which are rotatable in response to commands originating from a pilot and/or a flight control system.

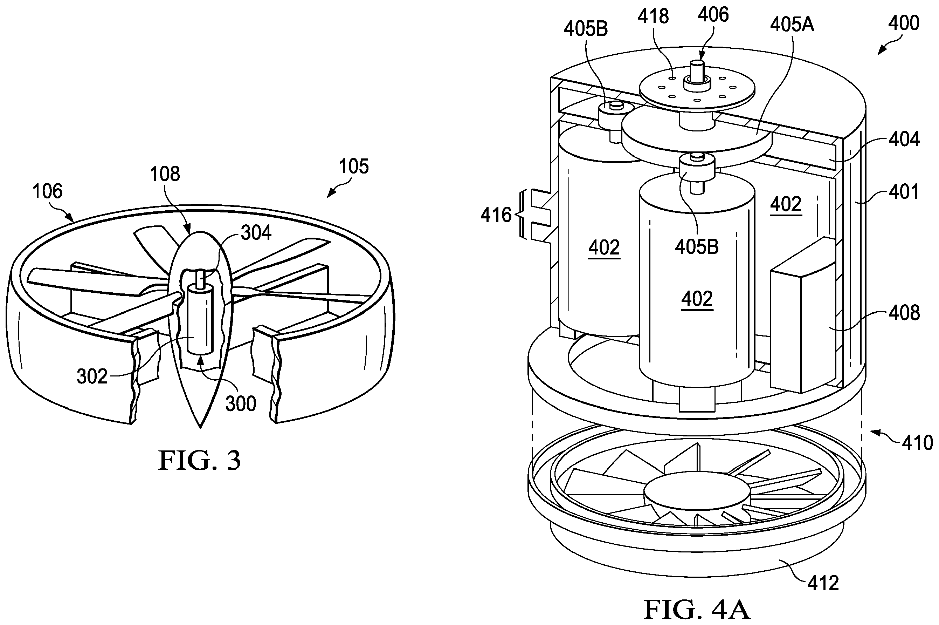

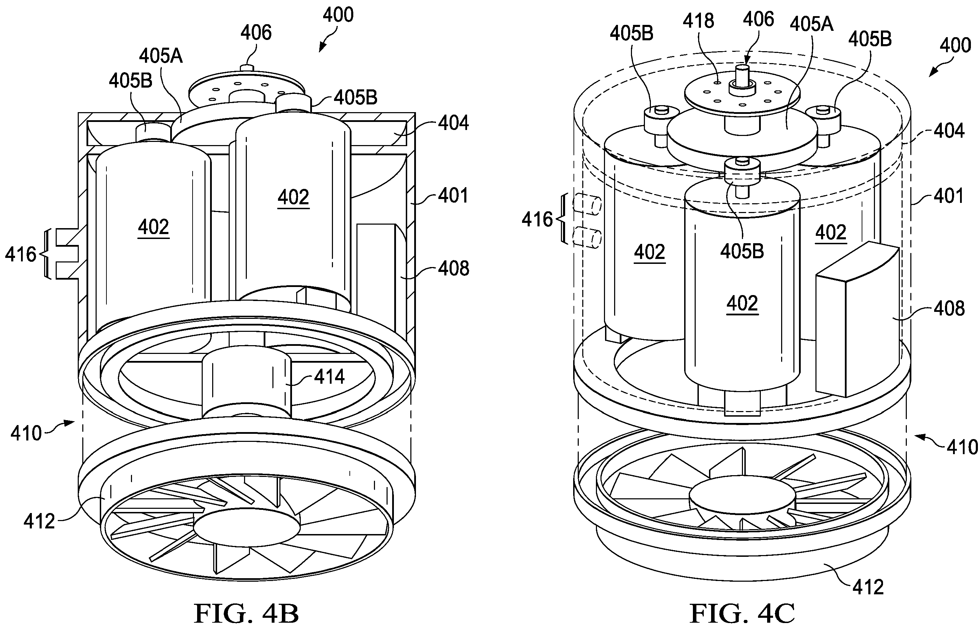

As shown in FIG. 3, and as will be described in detail below, each of the propulsion assemblies 105 utilize an electric motor assembly 300 disposed within a respective rotatable pylon 302 as a power source to rotate the respective rotor hub assembly 108 via a rotor mast 304. As will be described in greater detail below with reference to the remaining figures, the electric motor assembly 300 is implemented as a line replaceable unit ("LRU")
Referring now to FIGs. 4A-4C, in one embodiment, an integrated power unit 400 that may be used to implement the electric motor assembly 300, includes a housing 401 in which is disposed multiple electric motors, represented in FIGs. 4A-4C by three electric motors 402, that are combined via a gearbox 404, which in the illustrated embodiment is a spur 405A and planets 405B system. The motors 402 drive a rotor shaft 406 through the gearbox 404. Cooling of the motors 402 is handled by a liquid reservoir and pump assembly 408, a radial air-to-liquid heat exchanger 410, and an air cooling fan 412. The cooling fan 412 may be powered electrically (as shown in FIGs. 4A-4C, or mechanically via the rotor shaft 406. As illustrated in FIGs. 4A-4C, a collective pitch control rod and actuator 414 may optionally be integrated into the power unit 400.

In accordance with features of embodiments described herein, the power unit 400 is implemented as an LRU in which all supporting systems for unit (e.g., thermal cooling, fixed controls, and power transmission) are integrated into the assembly. The only interfaces necessary between the unit 400 and the aircraft into which it is installed are electrical connectors (illustrated in FIGs. 4A and 4B by connectors 416), structural attachments to the airframe, and rotor bolts 418. As previously noted, such integration allows for expedited aircraft maintenance and lower aircraft direct operating cost.

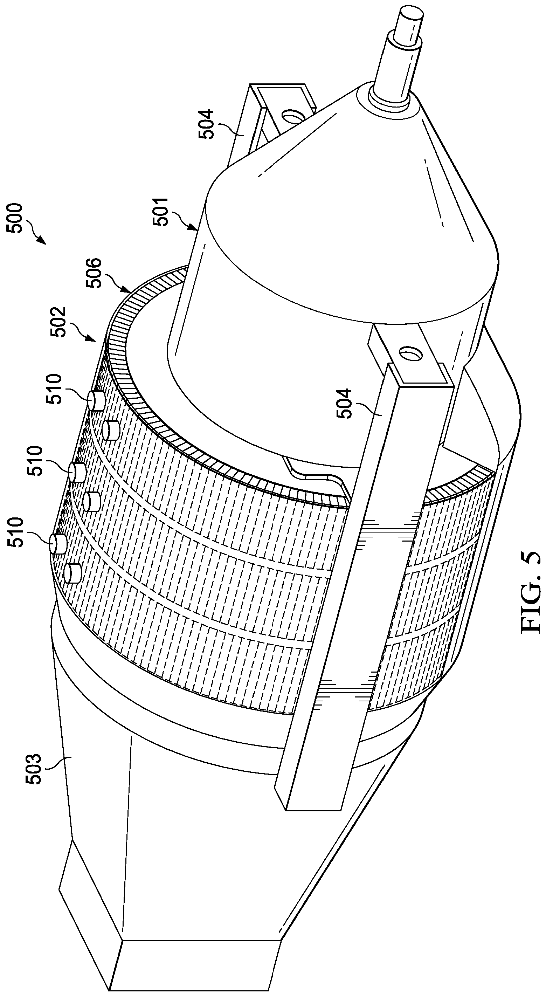

Referring now to FIG. 5, illustrated therein is an external view of an alternative embodiment of a power unit assembly 500 that may be used to implement the electric motor assembly 300. As shown in FIG. 5, the power unit assembly 500 comprises a gear box cover 501, an electrical unit 502, and a fan shroud 503. Side rails 504 disposed on opposite sides of the power unit assembly 500 to serve as structure and to hold the stack comprising gear box cover 501, electrical unit 502, and fan shroud 503 (i.e., the power unit), as well as a radial heat exchanger 506, together in lieu of a housing (such as housing 401). Heat exchanger 506 is provided to dissipate heat generated by electrical unit 502. Electrical connectors 510 are also provided for providing an electrical interface for transmitting power, data and/or control signals to and from the unit assembly 500.

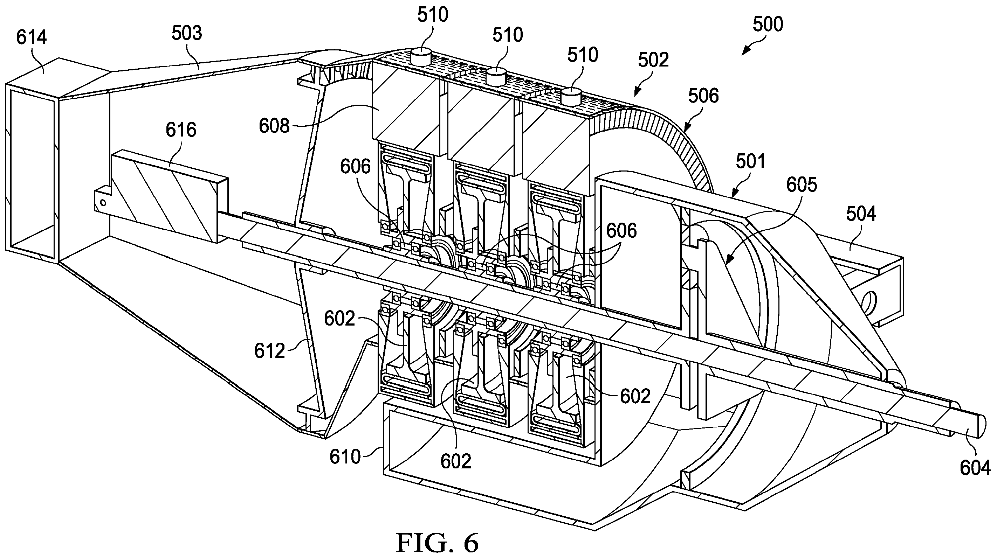

FIG. 6 is a cutaway view of the power unit assembly 500 shown in FIG. 6. As shown in FIG. 6, similar to the power unit 400, the power unit assembly 500 includes three electric motors 602 (which form a portion of the electrical unit 502); however, unlike the power unit 400, in the power unit assembly 500, the motors drive a common shaft 604 via a planetary gear box 605. One way clutches 606 are provided for preventing failure of a single one of the motors 602 from causing the rotor shaft 604 to seize or affecting the speed of the remaining motors. The electrical unit 502 further includes power electronics 608 for converting direct current (DC) into alternating current (AC) and cooling of the motors 602 is provided by an oil sump 610, a mechanical air cooling fan 612, and an oil cooler 614. A collective pitch actuators and control rod assembly 616 may also be provided for controlling collective pitch of the rotor blades connected to the rotor shaft 604. The fan shroud 503 is provided for directing air from the fan 612 into the oil cooler 614. Heat exchanger 506 includes a set of fins mounted on the outside of the motors 602 and power electronics 608 to dissipate the heat generated by the power electronics. Air is pulled through the heat exchanger via the cooling fan 612.

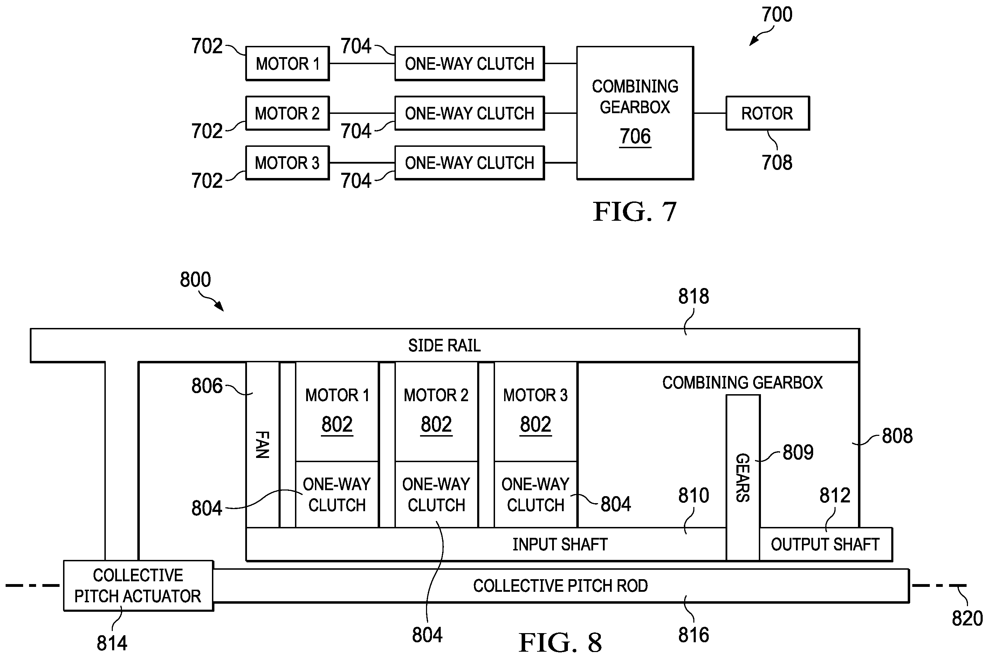

FIG. 7 is a high level block diagram of a mechanical power path of a power unit 700, such as the power unit 400 or the power unit assembly 500. As shown in FIG. 7, the power unit 700 includes a plurality of electric motors, represented in FIG. 7 by three motors 702, each having associated therewith a one-way clutch 704. A gearbox 706 sums the torque of the individual motors 702 to generate rotational power to a rotor 708. As previously noted, the one-way clutches 704 allow stoppage of one of the motors 702 without affecting the speed of the other motors.

FIG. 8 is a high level block diagram illustrating mechanical attachment of a power unit 800, such as the power unit 400 or the power unit assembly 500. As shown in FIG. 8, the power unit 800 includes electric motors 802, one-way clutches 804, a fan 806, an input shaft 808, and a combining gearbox 810 that includes a gear 809 connected between the input shaft 808 and an output shaft 812. The power unit 800 further includes a collective pitch actuator 814, a collective pitch rod 816, and a side rail 818. A centerline 820 passes through the center of the collective pitch rod 816 and aligns with the center of a rotor hub (not shown) driven by the power unit 800. In accordance with features of embodiments described herein, each motor 802 is bolted to a respective one-way clutch 804. Each of the one-way clutches 804 are splined to the input shaft 808. Each of the motors 802 is bolted to the side rail 818. The combining gearbox 810 and the collective pitch actuator 814 are also bolted to the side rail 818.

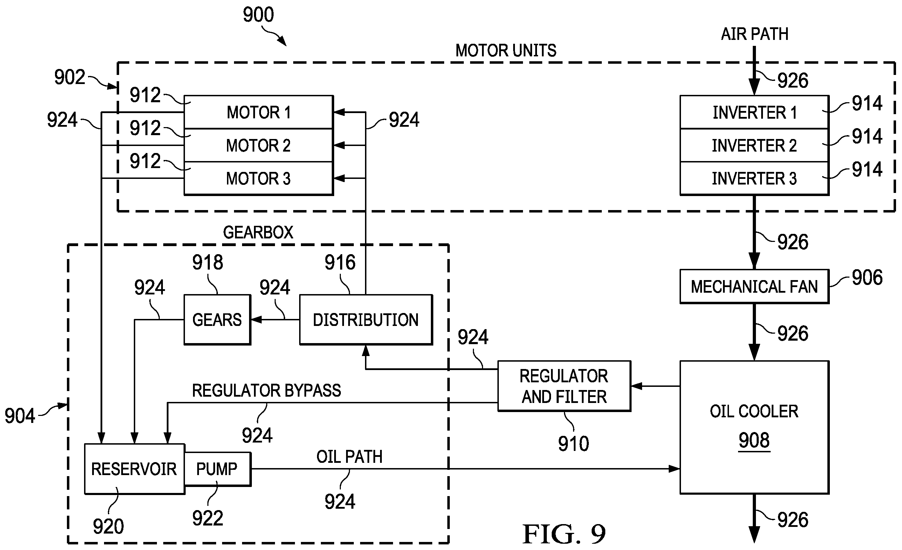

FIG. 9 is a schematic block diagram of a thermal cooling system of a power unit 900. As shown in FIG. 9, the power unit 900 includes an electric motor unit 902, a gearbox 904, a fan 906 (which is illustrated in FIG. 9 as a mechanical fan but which may also be implemented as an electrical fan in other embodiments), an oil cooler 908, and a regulator and filter 910. The motor unit 902 includes several electric motors 912 and corresponding inverters 914. The gearbox 904 includes a distribution module 916, gears 918, an oil reservoir 920, and an oil pump 922. An oil path through the unit 900 is illustrated by arrows 924. Beginning at the oil cooler 908, cooled oil is provided from the cooler to the regulator and filter 910, which filters and regulates the oil and from which a portion of it flows to the distribution module 916 and another portion of the cooled oil bypasses the regulator and flows to the reservoir 920. In certain embodiments, the latter path is used to bleed off excess pressure from the system. The distribution module 916 disperses oil to the motors 912 as well as the gears 918 to cool those elements. The oil used to cool the motors 912 and gears 918 then flows to the reservoir 920, from which it is pumped (via the pump 922) back to the oil cooler.

An air path through the power unit 900 is depicted by arrows 926. In particular, air is taken into the unit 900 via inverters 914 and is passed by the fam 906 to the oil cooler 908 to cool the oil therein for use in the oil path 924 (described above) and then out of the unit 900.

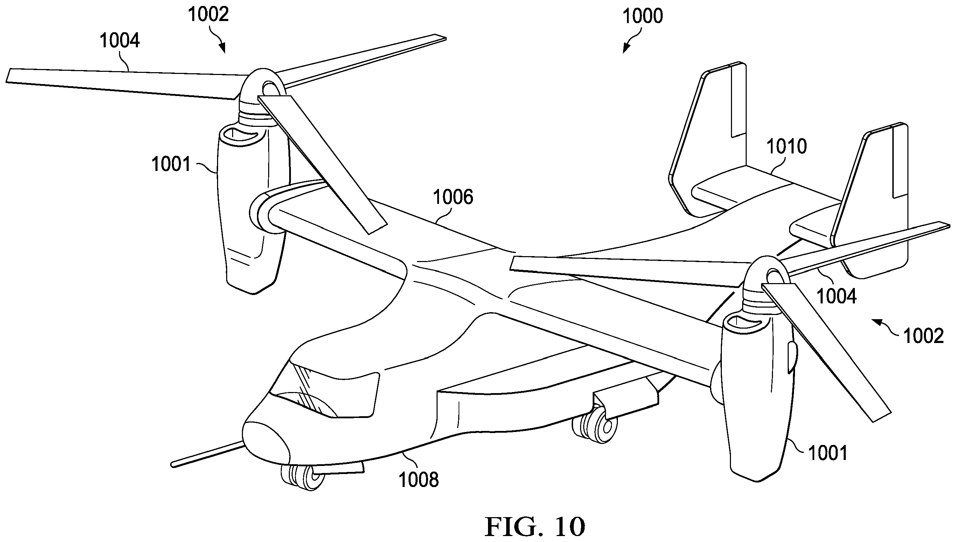

FIG. 10 illustrates a tiltrotor aircraft 1000 having unducted rotors. In particular, aircraft 1000 includes nacelles 1001 each of which comprises a rotor system 1002 including a plurality of rotor blades 1004. The pitch of each rotor blade 1004 can be managed or adjusted in order to selectively control direction, thrust, and lift of aircraft 1000. Similar to the aircraft 100 (FIGs. 1A-1C), the aircraft 1000 is convertible between a helicopter mode (shown in FIG. 10), which allows for vertical takeoff and landing, hovering, and low speed directional movement, and an airplane mode (not illustrated), which allows for forward flight as well as horizontal takeoff and landing.

Aircraft 1000 further includes wings 1006, a fuselage 1008, and at last one tail member 1010. As previously noted, nacelles 1002 are each configured to rotate between a helicopter mode, in which the nacelles 1002 are approximately vertical, and an airplane mode, in which the nacelles 1002 are approximately horizontal.

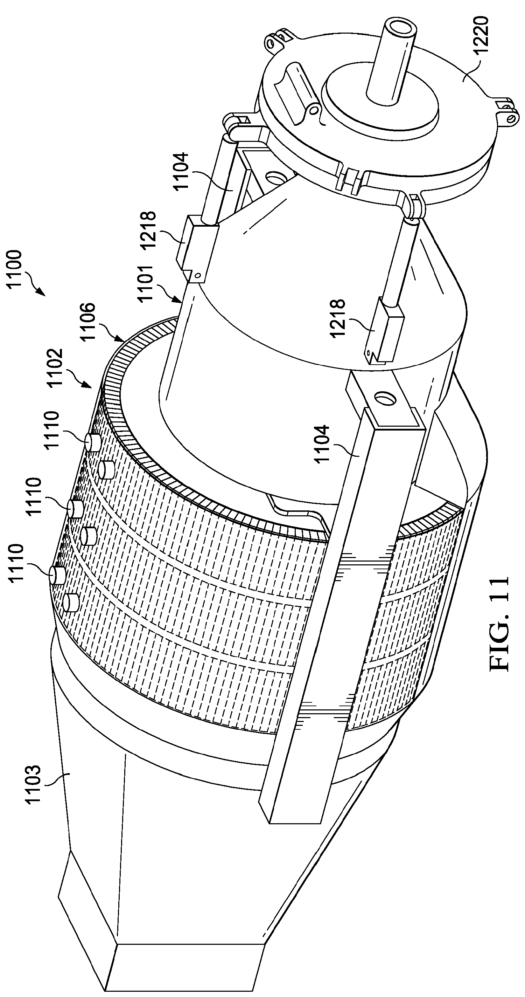

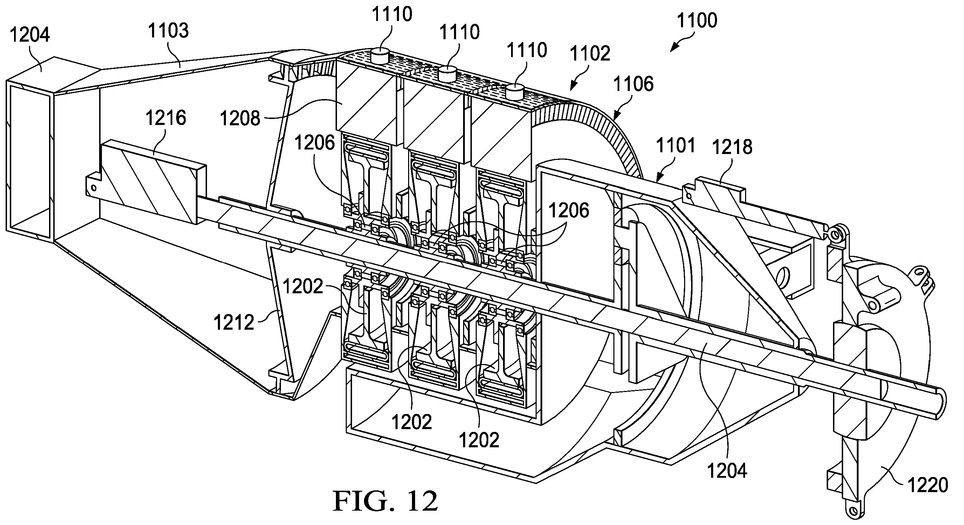

Referring now to FIGs. 11 and 12 and with continued reference to FIG. 10, in accordance with features of embodiments described herein, each nacelle 1001 includes a power unit assembly 1100 for driving rotor systems 1002. As shown in FIG. 11, the power unit assembly 1100 comprises a gear box housing 1101, an electrical unit 1102, and a fan shroud 1103. Side rails 1104 disposed on opposite sides of the power unit assembly 1100 serve as structure and to hold the stack comprising gear box housing 1101, electrical unit 1102, and fan shroud 1103, as well as a radial heat exchanger 1106 (i.e., the power unit), together in lieu of a housing (such as housing 401). Heat exchanger 1106 is provided to dissipate heat generated by electrical unit 1102. Electrical connectors 1110 are also provided for providing an electrical interface for transmitting power, data and/or control signals to and from the assembly 1100.

FIG. 12 is a cutaway view of the power unit assembly 1100 shown in FIG. 11. As shown in FIG. 12, the electrical unit 1102 of the power unit assembly 1100 includes three electric motors (i.e., motors 1202) that drive a common shaft 1204 via a planetary gear box 1205. One way clutches 1206 are provided for preventing failure of a single one of the motors 1202 from causing the rotor shaft 1204 to seize or affecting the speed of the remaining motors. The electrical unit 1102 further includes power electronics 1208 for converting direct current (DC) into alternating current (AC) and cooling of the motors 1202 is provided by an oil sump 1210, a mechanical air cooling fan 1212, and an oil cooler 1214. A collective pitch actuators and control rod assembly 1216 may also be provided for controlling collective pitch of the rotor blades connected to the rotor shaft 1204. Additionally, cyclic pitch actuators 1218 are provided and connected to a swashplate 1220 for providing cyclic control of the rotor blades. In particular, cyclic pitch actuators 1218 enable control of the mechanical pitch, or featuring, angle of each rotor blade independently depending on the position of the rotor blade in the cycle. Fan shroud 1103 is provided for directing air from the fan 1212 into the oil cooler 1214. Heat exchanger 1106 includes a set of fins mounted on the outside of the motors 1202 and power electronics 1208 to dissipate the heat generated by the power electronics. Air is pulled through the heat exchanger via the cooling fan 1212.

It should be appreciated that aircraft illustrated herein, such as ducted rotor aircraft 100 and unducted rotor aircraft 1000, are merely illustrative of a variety of aircraft that can implement the embodiments disclosed herein. Indeed, the various embodiments of the electric drive system line replaceable unit described herein may be used on any aircraft that utilizes motors. Other aircraft implementations can include hybrid aircraft, tiltrotor aircraft, quad tiltrotor aircraft, unmanned aircraft, gyrocopters, airplanes, helicopters, commuter aircraft, electric aircraft, hybrid-electric aircraft, ducted fan aircraft having any number of ducted fans, tiltwing aircraft, including tiltwing aircraft having one or more interwing linkages, more or fewer ducted fans or non-ducted rotors and the like. As such, those skilled in the art will recognize that the embodiments described herein for an electric drive system line replaceable unit can be integrated into a variety of aircraft configurations. It should be appreciated that even though aircraft are particularly well-suited to implement the embodiments of the present disclosure, nonaircraft vehicles and devices can also implement the embodiments.

The components of rotor assembly 108 may comprise any materials suitable for use with an aircraft rotor. For example, rotor blades 114 and rotor hub 124 may comprise carbon fiber or aluminum; and rotor mast 128, control tube 130, rotor hub 124, outer race 142, inner race 152, mast nut 168, mast adapter 146 may comprise steel or titanium. While rotor hub assembly 108 are shown with four rotor blades 114, respectively, it should be understood that they may have as few as two rotor blades and may have more than four rotor blades.

## Claims

1. An electric drive system (400, 500, 700, 800, 900, 1100) for an aircraft (100, 1000) comprising:
at least one motor (402, 602, 702, 802, 912, 1202);
at least one gear box (404, 605, 706, 808, 904, 1205) associated with the at least one motor (402, 602, 702, 802, 912, 1202);
an oil cooler (614, 908, 1214);
a cooling fan (412, 612, 806, 906, 1212) for drawing air into the electric drive system (400, 500, 700, 800, 900, 1100) across an electronic component (914) of the electric drive system (400, 500, 700, 800, 900, 1100) to cool the electronic component (914) and for expelling air into the oil cooler (614, 908, 1214) for cooling oil contained therein;
an oil distribution system (916) for distributing oil cooled by the oil cooler (614, 908, 1214) to the at least one motor (402, 602, 702, 802, 912, 1202) and the at least one gearbox (404, 605, 706, 808, 904, 1205), wherein the distributed oil is used to cool the at least one motor (402, 602, 702, 802, 912, 1202) and the at least one gearbox (404, 605, 706, 808, 904, 1205);
a reservoir (920) for collecting the distributed oil after it has been used to cool the at least one motor (402, 602, 702, 802, 912, 1202) and the at least one gearbox (404, 605, 706, 808, 904, 1205); **characterised by**:
at least one structural element (401, 504, 818, 1104) for retaining the at least one motor (402, 602, 702, 802, 912, 1202), the at least one gearbox (404, 605, 706, 808, 904, 1205), the cooling fan (412, 612, 806, 906, 1212), the oil distribution system (916), and the reservoir (920) together as a unit; and
a collective actuator (414, 616, 814, 1216) for controlling a collective pitch of rotor blades connected to the rotor shaft; wherein
the electric drive system (400, 500, 700, 800, 900, 1100) is implemented as a line replaceable unit, and the at least one structural element (401, 504, 818, 1104) comprises a housing (401) or first and second rails (504, 818, 1104) disposed on opposite sides of the unit.

2. A rotorcraft (100) comprising a rotor system, the rotor system comprising:
a ducted rotor (106);
a nacelle for supporting the ducted rotor (106); and
the electric drive system (400, 500, 700, 800, 900, 1100) of claim 1,
wherein the electric drive system (400, 500, 700, 800, 900, 1100) is implemented as a line replaceable unit disposed in the nacelle.

3. A rotorcraft (1000) comprising a rotor system, the rotor system comprising:
an unducted rotor (1002);
a nacelle (1001) for supporting the unducted rotor (1002); and
the electric drive system (400, 500, 700, 800, 900, 1100) of claim 1,
wherein the electric drive system (400, 500, 700, 800, 900, 1100) is implemented as a line replaceable unit disposed in the nacelle (1001).

4. The electric drive system (400, 500, 700, 800, 900, 1100) of claim 1, or the rotorcraft (100, 1000) of claim 2 or 3, further comprising a pump (922) associated with the reservoir (920) for returning the oil collected in the reservoir (920) to the oil cooler (614, 908, 1214).

5. The electric drive system (400, 500, 700, 800, 900, 1100) of claim 1 or claim 4, or the rotorcraft (100, 1000) of any of claims 2 to 4, wherein the at least one motor (402, 602, 702, 802, 912, 1202) comprises redundant electric motors (402, 602, 702, 802, 912, 1202).

6. The electric drive system (400, 500, 700, 800, 900, 1100) of any of claims 1, 4, or 5, or the rotorcraft (100, 1000) of any of claims 2 to 5, wherein power generated by the at least one motor (402, 602, 702, 802, 912, 1202) drives a rotor shaft (406, 604, 812, 1204) disposed through a center of the electric drive system (400, 500, 700, 800, 900, 1100).

7. The electric drive system (400, 500, 700, 800, 900, 1100) or rotorcraft (100, 1000) of claim 6, wherein the fan (412, 612, 806, 906, 1212) is mechanically powered by the rotor shaft (406, 604, 812, 1204).

8. The electric drive system (400, 500, 700, 800, 900, 1100) of any of claims 1 or 4 to 6, or the rotorcraft (100, 1000) of any of claims 2 to 6, wherein the fan (412, 612, 806, 906, 1212) is electrically powered.

9. The electric drive system (400, 500, 700, 800, 900, 1100) of any of claims 1 or 4 to 8, or the rotorcraft (100, 1000) of any of claims 2 to 8, wherein the electronic components comprise inverters (914).

10. The electric drive system (400, 500, 700, 800, 900, 1100) of any of claims 1 to 4 to 9, or the rotorcraft (100, 1000) of any of claims 2 to 9, further comprising a cyclic actuation system (1218) for controlling a cyclic pitch of rotor blades (114, 1004) connected to the rotor shaft (406, 604, 812, 1204).

11. The rotorcraft (100, 1000) of any of claims 2 to 10, wherein the at least one motor (402, 602, 702, 802, 912, 1202) comprises redundant electric motors (402, 602, 702, 802, 912, 1202) and power generated by the redundant electric motors (402, 602, 702, 802, 912, 1202) drives a rotor shaft (406, 604, 812, 1204) disposed through a center of the electric drive system (400, 500, 700, 800, 900, 1100).

## Patentansprüche

1. Elektrisches Antriebssystem (400, 500, 700, 800, 900, 1100) für ein Luftfahrzeug (100, 1000), umfassend:
mindestens einen Motor (402, 602, 702, 802, 912, 1202);
mindestens einen Getriebekasten (404, 605, 706, 808, 904, 1205), der dem mindestens einen Motor (402, 602, 702, 802, 912, 1202) zugeordnet ist;
einen Ölkühler (614, 908, 1214);
ein Kühlgebläse (412, 612, 806, 906, 1212) zum Saugen von Luft in das elektrische Antriebssystem (400, 500, 700, 800, 900, 1100) über eine elektronische Komponente (914) des elektrischen Antriebssystems (400, 500, 700, 800, 900, 1100), um die elektronische Komponente (914) zu kühlen und zum Ausstoßen von Luft in den Ölkühler (614, 908, 1214) zum Kühlen von darin enthaltenem Öl;
ein Ölverteilungssystem (916) zum Verteilen von Öl, das durch den Ölkühler (614, 908, 1214) gekühlt wird, an den mindestens einen Motor (402, 602, 702, 802, 912, 1202) und den mindestens einen Getriebekasten (404, 605, 706, 808, 904, 1205), wobei das verteilte Öl dazu verwendet wird, den mindestens einen Motor (402, 602, 702, 802, 912, 1202) und den mindestens einen Getriebekasten (404, 605, 706, 808, 904, 1205) zu kühlen;
einen Behälter (920) zum Sammeln des verteilten Öls, nachdem es zum Kühlen des mindestens einen Motors (402, 602, 702, 802, 912, 1202) und des mindestens einen Getriebekastens (404, 605, 706, 808, 904, 1205) verwendet wurde; **gekennzeichnet durch**:
mindestens ein Strukturelement (401, 504, 818, 1104) zum Halten des mindestens einen Motors (402, 602, 702, 802, 912, 1202), des mindestens einen Getriebekastens (404, 605, 706, 808, 904, 1205), des Kühlgebläses (412, 612, 806, 906, 1212), des Ölverteilungssystems (916) und des Behälters (920) zusammen als eine Einheit; und
einen kollektiven Aktor (414, 616, 814, 1216) zum Steuern einer kollektiven Neigung von mit der Rotorwelle verbundenen Rotorblättern; wobei
das elektrische Antriebssystem (400, 500, 700, 800, 900, 1100) als eine durch eine Leitung austauschbare Einheit umgesetzt ist und das mindestens eine Strukturelement (401, 504, 818, 1104) ein Gehäuse (401) oder eine erste und zweite Schiene (504, 818, 1104) umfasst, die auf gegenüberliegenden Seiten der Einheit angeordnet sind.

2. Drehflügler (100), umfassend ein Rotorsystem, wobei das Rotorsystem Folgendes umfasst:
einen Mantelrotor (106);
eine Gondel zum Stützen des Mantelrotors (106); und
das elektrische Antriebssystem (400, 500, 700, 800, 900, 1100) nach Anspruch 1,
wobei das elektrische Antriebssystem (400, 500, 700, 800, 900, 1100) als eine durch eine Leitung austauschbare Einheit, die in der Gondel angeordnet ist, umgesetzt ist.

3. Drehflügler (1000), umfassend ein Rotorsystem, wobei das Rotorsystem Folgendes umfasst:
einen freiliegenden Rotor (1002);
eine Gondel (1001) zum Stützen des freiliegenden Rotors (1002); und
das elektrische Antriebssystem (400, 500, 700, 800, 900, 1100) nach Anspruch 1,
wobei das elektrische Antriebssystem (400, 500, 700, 800, 900, 1100) als eine durch eine Leitung austauschbare Einheit, die in der Gondel (1001) angeordnet ist, umgesetzt ist.

4. Elektrisches Antriebssystem (400, 500, 700, 800, 900, 1100) nach Anspruch 1 oder Drehflügler (100, 1000) nach Anspruch 2 oder 3, ferner umfassend eine Pumpe (922), die dem Behälter (920) zugeordnet ist, zum Rückführen des in dem Behälter (920) gesammelten Öls zu dem Ölkühler (614, 908, 1214).

5. Elektrisches Antriebssystem (400, 500, 700, 800, 900, 1100) nach Anspruch 1 oder Anspruch 4 oder Drehflügler (100, 1000) nach einem der Ansprüche 2 bis 4, wobei der mindestens eine Motor (402, 602, 702, 802, 912, 1202) redundante Elektromotoren (402, 602, 702, 802, 912, 1202) umfasst.

6. Elektrisches Antriebssystem (400, 500, 700, 800, 900, 1100) nach einem der Ansprüche 1, 4 oder 5 oder Drehflügler (100, 1000) nach einem der Ansprüche 2 bis 5, wobei Leistung, die durch den mindestens einen Motor (402, 602, 702, 802, 912, 1202) erzeugt wird, eine Rotorwelle (406, 604, 812, 1204) antreibt, die durch eine Mitte des elektrischen Antriebssystems (400, 500, 700, 800, 900, 1100) angeordnet ist.

7. Elektrisches Antriebssystem (400, 500, 700, 800, 900, 1100) oder Drehflügler (100, 1000) nach Anspruch 6, wobei das Gebläse (412, 612, 806, 906, 1212) durch die Rotorwelle (406, 604, 812, 1204) mechanisch mit Leistung versorgt wird.

8. Elektrisches Antriebssystem (400, 500, 700, 800, 900, 1100) nach einem der Ansprüche 1 oder 4 bis 6 oder Drehflügler (100, 1000) nach einem der Ansprüche 2 bis 6, wobei das Gebläse (412, 612, 806, 906, 1212) elektrisch mit Leistung versorgt wird.

9. Elektrisches Antriebssystem (400, 500, 700, 800, 900, 1100) nach einem der Ansprüche 1 oder 4 bis 8 oder Drehflügler (100, 1000) nach einem der Ansprüche 2 bis 8, wobei die elektronischen Komponenten Wechselrichter (914) umfassen.

10. Elektrisches Antriebssystem (400, 500, 700, 800, 900, 1100) nach einem der Ansprüche 1 bis 4 bis 9 oder Drehflügler (100, 1000) nach einem der Ansprüche 2 bis 9, ferner umfassend ein zyklisches Betätigungssystem (1218) zum Steuern einer zyklischen Neigung von Rotorblättern (114, 1004), die mit der Rotorwelle (406, 604, 812, 1204) verbunden sind.

11. Drehflügler (100, 1000) nach einem der Ansprüche 2 bis 10, wobei der mindestens eine Motor (402, 602, 702, 802, 912, 1202) redundante Elektromotoren (402, 602, 702, 802, 912, 1202) umfasst und Leistung, die durch die redundanten Elektromotoren (402, 602, 702, 802, 912, 1202) erzeugt wird, eine Rotorwelle (406, 604, 812, 1204) antreibt, die durch eine Mitte des elektrischen Antriebssystems (400, 500, 700, 800, 900, 1100) angeordnet ist.

## Revendications

1. Système d'entraînement électrique (400, 500, 700, 800, 900, 1100) pour un aéronef (100, 1000) comprenant :
au moins un moteur (402, 602, 702, 802, 912, 1202) ;
au moins une boîte de vitesses (404, 605, 706, 808, 904, 1205) associée à l'au moins un moteur (402, 602, 702, 802, 912, 1202) ;
un refroidisseur d'huile (614, 908, 1214) ;
un ventilateur de refroidissement (412, 612, 806, 906, 1212) pour aspirer de l'air dans le système d'entraînement électrique (400, 500, 700, 800, 900, 1100) à travers un composant électronique (914) du système d'entraînement électrique (400, 500, 700, 800, 900, 1100) pour refroidir le composant électronique (914) et pour expulser de l'air dans le refroidisseur d'huile (614, 908, 1214) pour refroidir de l'huile contenue dans celui-ci ;
un système de distribution d'huile (916) pour distribuer de l'huile refroidie par le refroidisseur d'huile (614, 908, 1214) à l'au moins un moteur (402, 602, 702, 802, 912, 1202) et l'au moins une boîte de vitesses (404, 605, 706, 808, 904, 1205), dans lequel l'huile distribuée est utilisée pour refroidir l'au moins un moteur (402, 602, 702, 802, 912, 1202) et l'au moins une boîte de vitesses (404, 605, 706, 808, 904, 1205) ;
un réservoir (920) pour collecter l'huile distribuée après qu'elle a été utilisée pour refroidir l'au moins un moteur (402, 602, 702, 802, 912, 1202) et l'au moins une boîte de vitesses (404, 605, 706, 808, 904, 1205) ; **caractérisé par** :
au moins un élément structurel (401, 504, 818, 1104) pour retenir l'au moins un moteur (402, 602, 702, 802, 912, 1202), l'au moins une boîte de vitesses (404, 605, 706, 808, 904, 1205), le ventilateur de refroidissement (412, 612, 806, 906, 1212), le système de distribution d'huile (916), et le réservoir (920) ensemble comme une unité ; et
un actionneur collectif (414, 616, 814, 1216) pour commander un pas collectif de pales de rotor reliées à l'arbre de rotor ; dans lequel
le système d'entraînement électrique (400, 500, 700, 800, 900, 1100) est mis en œuvre comme une unité remplaçable de ligne, et l'au moins un élément structurel (401, 504, 818, 1104) comprend un boîtier (401) ou des premier et second rails (504, 818, 1104) disposés sur des côtés opposés de l'unité.

2. Giravion (100) comprenant un système de rotor, le système de rotor comprenant :
un rotor caréné (106) ;
une nacelle pour supporter le rotor caréné (106) ; et le système d'entraînement électrique (400, 500, 700, 800, 900, 1100) selon la revendication 1,
dans lequel le système d'entraînement électrique (400, 500, 700, 800, 900, 1100) est mis en œuvre comme une unité remplaçable de ligne disposée dans la nacelle.

3. Giravion (1000) comprenant un système de rotor, le système de rotor comprenant :
un rotor non caréné (1002) ;
une nacelle (1001) pour supporter le rotor non caréné (1002) ; et
le système d'entraînement électrique (400, 500, 700, 800, 900, 1100) selon la revendication 1,
dans lequel le système d'entraînement électrique (400, 500, 700, 800, 900, 1100) est mis en œuvre comme une unité remplaçable de ligne disposée dans la nacelle (1001).

4. Système d'entraînement électrique (400, 500, 700, 800, 900, 1100) selon la revendication 1, ou giravion (100, 1000) selon la revendication 2 ou 3, comprenant en outre une pompe (922) associée au réservoir (920) pour retourner l'huile collectée dans le réservoir (920) au refroidisseur d'huile (614, 908, 1214).

5. Système d'entraînement électrique (400, 500, 700, 800, 900, 1100) selon la revendication 1 ou la revendication 4, ou giravion (100, 1000) selon l'une quelconque des revendications 2 à 4, dans lequel l'au moins un moteur (402, 602, 702, 802, 912, 1202) comprend des moteurs électriques redondants (402, 602, 702, 802, 912, 1202).

6. Système d'entraînement électrique (400, 500, 700, 800, 900, 1100) selon l'une quelconque des revendications 1, 4, ou 5, ou giravion (100, 1000) selon l'une quelconque des revendications 2 à 5, dans lequel de la puissance générée par l'au moins un moteur (402, 602, 702, 802, 912, 1202) entraîne un arbre de rotor (406, 604, 812, 1204) disposé à travers un centre du système d'entraînement électrique (400, 500, 700, 800, 900, 1100).

7. Système d'entraînement électrique (400, 500, 700, 800, 900, 1100) ou giravion (100, 1000) selon la revendication 6, dans lequel le ventilateur (412, 612, 806, 906, 1212) est alimenté mécaniquement par l'arbre de rotor (406, 604, 812, 1204).

8. Système d'entraînement électrique (400, 500, 700, 800, 900, 1100) selon l'une quelconque des revendications 1 ou 4 à 6, ou giravion (100, 1000) selon l'une quelconque des revendications 2 à 6, dans lequel le ventilateur (412, 612, 806, 906, 1212) est alimenté électriquement.

9. Système d'entraînement électrique (400, 500, 700, 800, 900, 1100) selon l'une quelconque des revendications 1 ou 4 à 8, ou giravion (100, 1000) selon l'une quelconque des revendications 2 à 8, dans lequel les composants électroniques comprennent des onduleurs (914).

10. Système d'entraînement électrique (400, 500, 700, 800, 900, 1100) selon l'une quelconque des revendications 1 à 4 à 9, ou giravion (100, 1000) selon l'une quelconque des revendications 2 à 9, comprenant en outre un système d'actionnement cyclique (1218) pour commander un pas cyclique de pales de rotor (114, 1004) reliées à l'arbre de rotor (406, 604, 812, 1204).

11. Giravion (100, 1000) selon l'une quelconque des revendications 2 à 10, dans lequel l'au moins un moteur (402, 602, 702, 802, 912, 1202) comprend des moteurs électriques redondants (402, 602, 702, 802, 912, 1202) et de la puissance générée par les moteurs électriques redondants (402, 602, 702, 802, 912, 1202) entraîne un arbre de rotor (406, 604, 812, 1204) disposé à travers un centre du système d'entraînement électrique (400, 500, 700, 800, 900, 1100).
